# EUROPÄISCHE PATENTSCHRIFT

(11) **EP 3 506 028 B1**
(45) Veröffentlichungstag und Bekanntmachung des Hinweises auf die Patenterteilung: **09.03.2022**
(21) Anmeldenummer: 18212854.6
(22) Anmeldetag: 17.12.2018
(51) Int. Cl.: G05B 13/02, G05B 15/02, F01K 13/02, F22B 35/00

(54) **SYSTEM UND VERFAHREN ZUR BEREITSTELLUNG VON ENERGIE AN EINEN VERBRAUCHER**
SYSTEM AND METHOD FOR ENERGY SUPPLY TO A COMSUMER
SYSTÈME ET PROCÉDÉ DE LA FOURNITURE D'ÉNERGIE À UN CONSOMMATEUR

(30) Priorität: 21.12.2017 DE 102017223549
(43) Veröffentlichungstag der Anmeldung: 03.07.2019
(73) Patentinhaber: Siemens Aktiengesellschaft, 80333 München (DE)
(72) Erfinder: Danov, Vladimir, 91056 Erlangen (DE); Käßer, Andreas, 91560 Heilsbronn (DE); Thiem, Sebastian, 90409 Nürnberg (DE)

(56) Entgegenhaltungen:
- EP-A2- 2 919 079
- DE-A1-102016 205 028
- US-A1- 2015 134 120

## Beschreibung

Die vorliegende Erfindung betrifft ein Energiesystem, insbesondere ein multimodales Energiesystem, mit wenigstens zwei Komponenten und einer Regeleinheit. Weiterhin betrifft die Erfindung ein Verfahren zum Betrieb eines Energiesystems mit wenigstens zwei Komponenten.

Multimodale Energiesysteme stellen wenigstens eine Energieform für einen Energieverbraucher, beispielsweise ein Gebäude, eine Industrieanlage oder eine private Anlage, bereit, wobei die Bereitstellung insbesondere durch eine Umwandlung verschiedener Energieformen, durch einen Transport verschiedener Energieformen und/oder durch gespeicherte Energieformen, erfolgen kann. Mit anderen Worten werden die verschiedenen Energieformen, beispielsweise Wärme, Kälte oder elektrische Energie mittels des multimodalen Energiesystems bezüglich ihrer Erzeugung, ihrer Bereitstellung und/oder ihrer Speicherung gekoppelt.

Es ist bekannt Energiesysteme, insbesondere multimodale Energiesysteme, mittels eines Energiesystemdesignverfahrens möglichst optimal auszulegen. Hierzu wird ein mathematisches Modell des Energiesystems bereitgestellt, welches eine Optimierung des Energiesystems bezüglich einer Zielfunktion mittels eines mathematischen und/oder nummerischen Optimierungsverfahrens ermöglicht. Typischerweise ist ein hierzu verwendeter Algorithmus komplex und es ist eine Vielzahl von nummerischen Eingangsparametern, beispielsweise Vorhersagen von Lastprofilen und/oder Ist-Zustandsmessungen, zur Parametrisierung des Energiesystemdesignverfahrens erforderlich. Dadurch ergeben sich hohe Kosten, sodass typischerweise auf ein Energiesystemdesignverfahren zur Auslegung des Energiesystems verzichtet wird.

Weiterhin ist bekannt ein Energiesystem mittels eines Energiemanagementsystems möglichst optimal zu betreiben. Dies ist typischerweise mit einem hohen Aufwand verbunden.

Das Dokument DE 10 2016 205028 A1 betrifft ein Verfahren zum Steuern einer multivalenten Energieversorgungsanlage.

Der vorliegenden Erfindung liegt die Aufgabe zugrunde, ein möglichst optimal betreibbares Energiesystem bereitzustellen.

Die Aufgabe wird durch ein Energiesystem mit den Merkmalen des unabhängigen Patentanspruches 1 sowie durch ein Verfahren mit den Merkmalen des unabhängigen Patentanspruches 7 gelöst. In
den abhängigen Patentansprüchen sind vorteilhafte Ausgestaltungen und Weiterbildungen der Erfindung angegeben.

Das erfindungsgemäße Energiesystem, welches eine Energieform für einen Energieverbraucher bereitstellt, umfasst wenigstens eine erste und eine zweite Komponente und eine Regeleinheit, wobei
- die Komponenten zur Bereitstellung einer selben Energieform ausgebildet sind; und
- mittels der Regeleinheit wenigstens die Bereitstellung der Energieform regelbar ist; und
- mittels der Regeleinheit ein erster Grenzschaltwert der ersten Komponente und ein zweiter Grenzschaltwert der zweiten Komponente berechenbar ist;
   wobei die Regeleinheit dazu ausgestaltet ist;
- den ersten Grenzschaltwert mittels einer Regelgröße der ersten Komponente und mittels wenigstens einem Wirkungsgrad der ersten Komponente zu berechnen; und
- den zweiten Grenzschaltwert mittels einer Regelgröße der zweiten Komponente und mittels wenigstens einem Wirkungsgrad der zweiten Komponente zu berechnen; wobei
- die Regeleinheit ferner dazu ausgestaltet ist, die Bereitstellung der Energieform derart zu regeln, dass die Energieform durch die Komponente mit dem kleinsten der zwei Grenzschaltwerte bereitgestellt wird.

Als Komponenten kann das erfindungsgemäße Energiesystem einen oder mehrere Stromgeneratoren, Kraftwärmekopplungsanlagen, insbesondere Blockheizkraftwerke, Gasboiler, Dieselgeneratoren, Wärmepumpen, Kompressionskältemaschinen, Absorptionskältemaschinen, Pumpen, Fernwärmenetzwerke, Energietransferleitungen, Windkrafträder oder Windkraftanlagen, Photovoltaikanlagen, Biomasseanlagen, Biogasanlagen, Müllverbrennungsanlagen, Industrieanlagen, konventionelle Kraftwerke und/oder dergleichen umfassen.

Die Energieform kann Wärme, Kälte, elektrische Energie, mechanische Energie und/oder chemische Energie sein. Das Energiesystem kann zur Bereitstellung einer Mehrzahl von Energieformen ausgebildet sein. Weiterhin kann das Energiesystem als multimodales Energiesystem ausgebildet sein. Typischerweise wird die Energieform zur Deckung einer durch einen Energieverbraucher verursachten Last bereitgestellt.

Das erfindungsgemäße Energiesystem, insbesondere multimodale Energiesystem, weist die Regeleinheit auf, die erfindungsgemäß dazu ausgebildet ist, eine Einschaltreihenfolge der Komponenten des Energiesystems optimiert festzulegen. Mit anderen Worten regelt die Regeleinheit, welche der Komponenten zur Bereitstellung der Energieform (zuerst) herangezogen wird. Zur Bereitstellung der Energieform wird erfindungsgemäß die Komponente herangezogen, die den kleinsten der Grenzschaltwerte aufweist.

Erfindungsgemäß werden die Grenzschaltwerte mittels der Regeleinheit berechnet. Die Grenzschaltwerte werden hierbei aus einer Regelgröße der jeweiligen Komponente und wenigstens einem Wirkungsgrad der jeweiligen Komponente berechnet. Dadurch wird vorteilhaftweise der Wirkungsgrad der jeweiligen Komponente zur Festlegung der Einschaltreihenfolge berücksichtigt. Mit anderen Worten ergibt sich eine vorteilhafte und somit optimale Einschaltreihenfolge der Komponenten des Energiesystems, falls eine Last, das heißt ein Bedarf für die durch die Komponenten bereitgestellte, insbesondere erzeugte, Energieform vorhanden ist.

Ein weiterer Vorteil des erfindungsgemäßen Energiesystems ist, dass zu jedem Zeitpunkt eine Deckung der Lasten durch die Bereitstellung der zugehörigen Energieform durch die Komponenten ermöglicht wird, wobei die Last durch die Komponenten mit dem kleinsten Grenzschaltwert gedeckt wird. Dadurch ergibt sich vorteilhafterweise ein wirtschaftlicher und energetisch effizienter Betrieb des erfindungsgemäßen Energiesystems.

Insbesondere ist es nicht erforderlich eine optimale Einschaltreihenfolge mittels eines aufwendigen Energiemanagementsystems/-verfahrens, das heißt mittels einer mathematischen und/oder nummerischen Optimierung zu bestimmen. Das ist deshalb der Fall, da sich gezeigt hat, dass das erfindungsgemäße Energiesystem vergleichbar optimal betreibbar zu einem mittels eines Energiemanagementsystems optimal betriebenen oder betreibbaren Energiesystems ist. Beispielsweise wurde für ein Bürogebäude in Frankfurt festgestellt, dass ein gemäß einer Ausgestaltung der vorliegenden Erfindung betriebenes Energiesystem bezüglich seiner Wirtschaftlichkeit zu einem mittels eines bekannten Energiesystemmanagementverfahrens betriebenen Energiesystem einen maximalen Unterschied von 1,3 Prozent aufweist. Mit anderen Worten stellt das erfindungsgemäße Energiesystem einen heuristischen Ansatz dar, wobei der heuristische Ansatz zu einem bekannten Energiemanagementverfahren vergleichbare Resultate ermöglicht. Insbesondere sind vorteilhafterweise keine prognostizierten Lastprofile wie bei bekannten Energiemanagementverfahren erforderlich.

Das erfindungsgemäße Verfahren zum Betrieb eines Energiesystems, welches eine Energieform für einen Energieverbraucher bereitstellt, wobei das Energiesystem wenigstens eine erste und eine zweite Komponente zur Bereitstellung einer selben Energieform umfasst, umfasst wenigstens die folgenden Schritte:
- Berechnen eines ersten Grenzschaltwertes der ersten Komponente; wobei
- der erste Grenzschaltwert mittels einer Regelgröße der ersten Komponente und mittels wenigstens einem Wirkungsgrad der ersten Komponente berechnet wird; und
- Berechnen eines zweiten Grenzschaltwertes der zweiten Komponente; wobei
- der zweite Grenzschaltwert mittels einer Regelgröße der zweiten Komponente und mittels wenigstens einem Wirkungsgrad der zweiten Komponente berechnet wird; und
- Bereitstellen der Energieform durch die Komponente mit dem kleinsten der zwei Grenzschaltwerte.

Das erfindungsgemäße Verfahren ermöglicht ein vorteilhaftes heuristisches Verfahren zum Betrieb eines Energiesystems, welches wenigstens zwei Komponenten für die Bereitstellung derselben Energieform aufweist. Hierbei ist es erfindungsgemäß vorgesehen, dass die Komponente mit dem Kleinsten der zwei Grenzschaltwerte (zuerst) zur Bereitstellung der Energieform verwendet wird. Die Grenzschaltwerte der Komponenten berücksichtigen die jeweiligen Wirkungsgrade der Komponenten, sodass sich hieraus eine optimale Einschaltreihenfolge der Komponenten ergibt.

Das Energiesystem kann zum Berechnen der Grenzschaltwerte und zum Regeln der Bereitstellung der Energieform eine Regeleinheit umfassen. Die Regeleinheit kann weiterhin eine Recheneinheit, insbesondere zum Berechnen der Grenzschaltwerte, umfassen. Die Regelgrößen und/oder Wirkungsgrade können bereitgestellt, erfasst oder innerhalb der Regeleinheit oder der Recheneinheit hinterlegt und/oder gespeichert sein. Insbesondere ist das Verfahren zum Betrieb des erfindungsgemäßen Energiesystems vorgesehen.

Die Grenzschaltwerte der Komponenten des Energiesystems können zeitabhängig sein. Mit anderen Worten können zu verschiedenen Zeitpunkten die Grenzschaltwerte der Komponenten berechnet werden. Dadurch wird erneut festgelegt, welche der Komponenten für die Bereitstellung der Energieform zum Decken einer aktuellen Last herangezogen wird. Die Zeitpunkte können hierbei einen zeitlich konstanten Abstand zueinander aufweisen. Die Einschaltreihenfolge der Komponenten beziehungsweise die Bereitstellung der Energieform kann somit innerhalb festgelegter Zeiträume neu ermittelt werden.

Es ergeben sich zum bereits genannten erfindungsgemäßen Energiesystem gleichartige und gleichwertige Vorteile des erfindungsgemäßen Verfahrens.

Gemäß einer vorteilhaften Ausgestaltung der Erfindung ist die Regelgröße der ersten und zweiten Komponente eine Kohlenstoffdioxidemission der jeweiligen Komponente.

Mit anderen Worten wird der erste Grenzschaltwert mittels der Kohlenstoffdioxidemission der ersten Komponente und mittels des Wirkungsgrades der ersten Komponente berechnet. Der zweite Grenzschaltwert wird mittels der Kohlenstoffdioxidemission der zweiten Komponente und mittels des Wirkungsgrades der zweiten Komponente berechnet.

Besonders bevorzugt ist hierbei ***K*₁ = *p*₁/*η*₁** und ***K*₂ = *p*₂/*η*₂,** wobei ***p*₁** die Kohlenstoffdioxidemission der ersten Komponente und ***p*₂** die Kohlenstoffdioxidemission der zweiten Komponente bezeichnet. Mit anderen Worten wird die Komponente zur Bereitstellung der Energieform herangezogen, die den kleinsten Quotienten von Kohlenstoffdioxidemission zu Wirkungsgrad aufweist. Dadurch wird vorteilhafterweise bezüglich der Kohlenstoffdioxidemission des Energiesystems eine optimale oder verbesserte Einschaltreihenfolge der Komponenten bereitgestellt. Mit anderen Worten wird die Komponente eingeschaltet beziehungsweise zur Bereitstellung der Energieform herangezogen, die die kleinste Kohlenstoffdioxidemission bezogen auf ihren Wirkungsgrad aufweist.

In einer vorteilhaften Weiterbildung der Erfindung ist als Regelgröße der ersten und zweiten Komponente ein Kostenwert zur Bereitstellung der Energieform durch die jeweilige Komponente vorgesehen.

Vorteilhafterweise ergibt sich dadurch ein Energiesystem, welches möglichst effizient, insbesondere bezüglich seiner Wirtschaftlichkeit, betrieben werden kann. Das ist deshalb der Fall, da die Komponente des Energiesystems zur Bereitstellung der Energieform und somit zur Deckung einer angeforderten Last herangezogen wird, die bezüglich ihres Wirkungsgrades den geringsten Kostenwert aufweist. Beispielsweise sind die Komponenten zur Bereitstellung von Wärme ausgebildet, wobei zur Bereitstellung der Wärme elektrische Energie durch die Komponenten verbraucht und/oder bezogen wird. Diese elektrische Energie weist einen bestimmten Kostenwert auf, der typischerweise in Euro pro Kilowattstunde gekennzeichnet ist. Die Grenzschaltwerte können sich demnach durch die Kosten pro Kilowattstunde pro Wirkungsgrad der jeweiligen Komponente.

Hierbei können nicht nur Kosten eingespart werden, sondern die Kosten sind typischerweise mit weiteren Größen, beispielsweise den Kohlenstoffdioxidemissionen, direkt oder indirekt gekoppelt. Die Kostenwerte dienen daher zur Bereitstellung besonders vorteilhafter Grenzschaltwerte, die bezüglich der weiteren Größen, einen energetisch effizienteren und/oder ökologischeren Betrieb des Energiesystems ermöglichen. Sie weisen daher eine technische Wirkung auf. Mit anderen Worten können die Kostenwerte als Maß für die technische Wirkung der verbesserten energetischen Effizienz und/oder der verbesserten ökologischen Bilanz des Energiesystems herangezogen werden.

Erfindungsgemäß ist der erste Grenzschaltwert ***K*₁** mittels ***K*₁** = ***p*₁/*η*₁** und der zweite Grenzschaltwert ***K*₂** mittels ***K*₂** = ***p*₂/*η*₂** gebildet, wobei ***p*₁** die Regelgröße und ***η*₁** den Wirkungsgrad der ersten Komponente in Bezug auf die Bereitstellung der Energieform, und ***p*₂** die Regelgröße und ***η*₂** den Wirkungsgrad der zweiten Komponente in Bezug auf die Bereitstellung der Energieform kennzeichnen.

Vorteilhafterweise ergibt sich dadurch ein besonders effizienter und einfacher Zusammenhang zwischen dem Grenzschaltwert, der Regelgröße und dem Wirkungsgrad der jeweiligen Komponente. Trotz des einfacheren Zusammenhangs kann eine nahezu optimale Auslegung beziehungsweise ein nahezu optimaler Betrieb des Energiesystems sichergestellt werden. Insbesondere wird durch den oben genannten Zusammenhang berücksichtigt, dass der Grenzschaltwert indirekt proportional zum Wirkungsgrad der jeweiligen Komponente ist. Mit anderen Worten wird bei gleicher Regelgröße der Komponenten die Komponente bevorzugt eingeschaltet und/oder zur Bereitstellung der Energieform herangezogen, die den größeren und somit besseren Wirkungsgrad aufweist. Bei gleichem Wirkungsgrad der Komponenten wird bevorzugt die Komponente eingeschaltet und/oder zur Bereitstellung der Energieform herangezogen, die die kleinste Regelgröße, insbesondere die kleinste Kohlenstoffdioxidemission und/oder den kleinsten Kostenwert, aufweist.

In einer vorteilhaften Weiterbildung der Erfindung ist die erste Komponente als Blockheizkraftwerk ausgebildet, wobei das Blockheizkraftwerk zur Bereitstellung von Wärme und elektrischer Energie ein Gas bezieht, und die Regelgröße der ersten Komponente in Bezug auf eine Bereitstellung thermischer Energie mittels ***K*₁** = ***p*_{thermisch}/*η*_{thermisch}** mit ***p*_{thermisch}** = ***p*_{Gas}**-***η*_{elektrisch}** · ***p*_{elektrisch}** gebildet, wobei ***p*_{Gas}** die zum Gasverbrauch des Blockheizkraftwerkes zugehörige Regelgröße ist, ***p*_{elektrisch}** die zur Bereitstellung elektrischer Energie durch das Blockheizkraftwerk zugehörige Regelgröße ist, ***η*_{elektrisch}** den Wirkungsgrad des Blockheizkraftwerkes für die Bereitstellung der elektrischen Energie kennzeichnet und ***η*_{thermisch}** den Wirkungsgrad für die Erzeugung der Wärme kennzeichnet.

Durch diese vorteilhafte Festlegung des Grenzschaltwertes für das Blockheizkraftwerk wird dessen dualer Charakter bezüglich seiner Bereitstellung von Wärme und elektrischer Energie berücksichtigt. Insbesondere bezieht das Blockheizkraftwerk zur Bereitstellung der Wärme ein Gas, wobei dem bezogenen Gas beispielsweise ein Kostenwert ***p*_{Gas}** zugeordnet ist. Das Gas wird zur Bereitstellung der Wärme durch das Blockheizkraftwerk verwendet. Hierbei wird zusätzlich elektrische Energie durch das Blockheizkraftwerk erzeugt. Die elektrische Energie kann wiederum in ein Stromnetz für den Kostenwert ***p*_{elektrisch}** eingespeist werden. Die Erzeugung der Wärme erfolgt mit dem Wirkungsgrad ***η*_{thermisch}** und die Erzeugung der elektrischen Energie mit dem Wirkungsgrad ***p*_{elektrisch}**. Daher ist es vorteilhaft die Grenzschaltkosten für das Blockheizkraftwerk durch ***K*₁** = ***p*_{thermisch}/*η*_{thermisch}** mit ***p*_{thermisch}** = ***p*_{Gas} - *η*_{elektrisch}** · ***p*_{elektrisch}** festzulegen, sodass durch das Einspeisen der elektrischen Energie die Regelgröße ***η*_{elektrisch}** · ***p*_{elektrisch}** von der Regelgröße ***p*_{Gas}** zu subtrahieren ist. Mit anderen Worten wird durch die vorteilhafte Festlegung oder Ausbildung des Grenzschaltwertes des Blockheizkraftwerkes berücksichtigt, dass das Blockheizkraftwerk bei der Bereitstellung von Wärme zusätzlich elektrische Energie bereitstellt (dualer Charakter), wobei die elektrische Energie beispielsweise in ein mit dem Energiesystem verbundenes Stromnetz eingespeist wird.

Weist beispielsweise das Blockheizkraftwerk bezüglich der Bereitstellung der Wärme und der elektrischen Energie einen vergleichbaren Wirkungsgrad auf und ist der Kostenwert des Gases ebenfalls vergleichbar mit dem Kostenwert für die Einspeisung der elektrischen Energie, so gilt ***K*₁ ≈ 0**. Dadurch würde die Bereitstellung der Wärme typischerweise durch das Blockheizkraftwerk erfolgen.

In einer vorteilhaften Weiterbildung der Erfindung umfasst das Energiesystem wenigstens einen Energiespeicher, insbesondere einen Wärmespeicher und/oder einen Kältespeicher, wobei die Regeleinheit dazu ausgebildet ist, den Ladezustand des Energiespeichers zu regeln.

Vorteilhafterweise kann durch den Energiespeicher die Bereitstellung der Energieform und dessen Verbrauch entkoppelt werden. Weiterhin kann bei einer Last, das heißt bei einer Anforderung zur Bereitstellung der Energieform diese vorteilhafterweise zunächst durch den Energiespeicher gedeckt werden. Wird die Energieform durch den Energiespeicher bereitgestellt, so wird der Energiespeicher in diesem Sinne eingeschaltet.

Es ist besonders bevorzugt, wenn der Energiespeicher dazu ausgebildet ist, mittels wenigstens einer der Komponenten des Energiesystems beladen zu werden.

Der Energiespeicher ist zur Speicherung oder zur Zwischenspeicherung der Energieform vorgesehen. Insbesondere ist der Energiespeicher als Wärmespeicher, Kältespeicher, elektrische Energiespeicher, beispielsweise elektrochemische Energiespeicher und/oder Wasserstoffspeicher ausgebildet. Eine Mehrzahl von gleichen oder verschiedenen Energiespeichern kann vorgesehen sein.

Vorteilhafterweise werden/wird die Beladung und/oder Entladung des Energiespeichers, das heißt sein Ladezustand, geregelt. Hierzu kann die Regeleinheit vorgesehen sein.

Hierbei ergeben sich wenigstens zwei verschiedene Verfahren zur Regelung des Ladezustandes des Energiespeichers.

Gemäß einer ersten Ausgestaltung erfolgt die Regelung der Entladung des Energiespeichers in Abhängigkeit wenigstens eines zu einer der Entladung vorangegangenen Beladung des Energiespeichers zugehörigen Grenzschaltwertes, wobei der Grenzschaltwert des Energiespeichers aus den Grenzschaltwerten der zu seiner Beladung beitragenden Komponenten gebildet wird.

Dadurch wird dem Energiespeicher ein Grenzschaltwert zugeordnet, der durch die zu seiner Beladung beitragenden Komponenten und deren Grenzschaltwerte gebildet wird.

Mit anderen Worten wird der Energiespeicher entladen, wenn der bei der Beladung des Energiespeichers berechnete Grenzschaltwert der den Energiespeicher beladenen Komponente, kleiner als der Grenzschaltwert aller Komponenten des Energiesystems ist, die aktuelle dieselbe Energieform bereitstellen könnten. Der zur Beladung des Energiespeichers zugehörige Grenzschaltwert kann bei einer Mehrzahl von Komponenten, die den Energiespeicher beladen haben, aus einem Mittelwert oder einem zeitlichen Mittelwert der einzelnen Grenzschaltwerte der den Energiespeicher beladenen Komponenten gebildet werden.

Ist der Grenzschaltwert einer Komponente des Energiesystems kleiner als der dem Energiespeicher zugeordnete Grenzschaltwert, so wird die genannte Komponente eingeschaltet und somit zur Bereitstellung der Energieform verwendet, da dies den Grenzschaltwert des Energiespeichers verringert.

Alternativ oder ergänzend kann die Regelung des Energiespeichers derart erfolgen, dass die Bereitstellung der Energieform vorrangig durch eine Entladung des Energiespeichers erfolgt.

Mit anderen Worten wird die Last vorrangig durch die innerhalb des Energiespeichers gespeicherte Energieform gedeckt.

Gemäß einer vorteilhaften Ausgestaltung der Erfindung wird der Energiespeicher durch eine Mehrzahl von Komponenten in aufsteigender Reihenfolge ihrer Grenzschaltwerte beladen.

Der Energiespeicher wird mit der Energieform durch die Komponenten in der Reihenfolge ihrer Grenzschaltwerte beladen. Mit anderen Worten erfolgt die Beladung des Energiespeichers zunächst mit der Komponente, die den kleinsten Grenzschaltwert aufweist. Anschließend erfolgt die Beladung durch die Komponente, die den zweitkleinsten Grenzschaltwert aufweist. Dies wird solange fortgesetzt, bis der Energiespeicher einen festgelegten maximalen Ladezustand erreicht oder der Energiespeicher vollständig beladen ist. Dadurch ergibt sich eine in Bezug auf die Grenzschaltwerte vorteilhafte Beladung des Energiespeichers.

Besonders bevorzugt ist es hierbei, wenn die Regelung der Beladung und/oder Entladung des Energiespeichers in Abhängigkeit der am Standort des Energiespeichers vorherrschenden Jahreszeit erfolgt.

Mit anderen Worten kann die Regelung und somit der Ladezustand des Energiespeichers in Abhängigkeit der Jahreszeiten erfolgen.

Weitere Vorteile, Merkmale und Einzelheiten der Erfindung ergeben sich aus den im Folgenden beschriebenen Ausführungsbeispielen sowie anhand der Zeichnungen. Dabei zeigen schematisiert:
- Figur 1: ein erstes Flussdiagramm zum Betrieb eines Energiesystems gemäß einer ersten Ausgestaltung der Erfindung;
- Figur 2: ein zweites Flussdiagramm zum Betrieb eines Energiesystems gemäß einer zweiten Ausgestaltung der Erfindung; und
- Figur 3: eine Regelung eines Energiespeichers eines Energiesystems gemäß einer weiteren Ausgestaltung der Erfindung.

Gleichartige, gleichwertige oder gleichwirkende Elemente können in einer der Figuren oder in den Figuren mit denselben Bezugszeichen versehen sein.

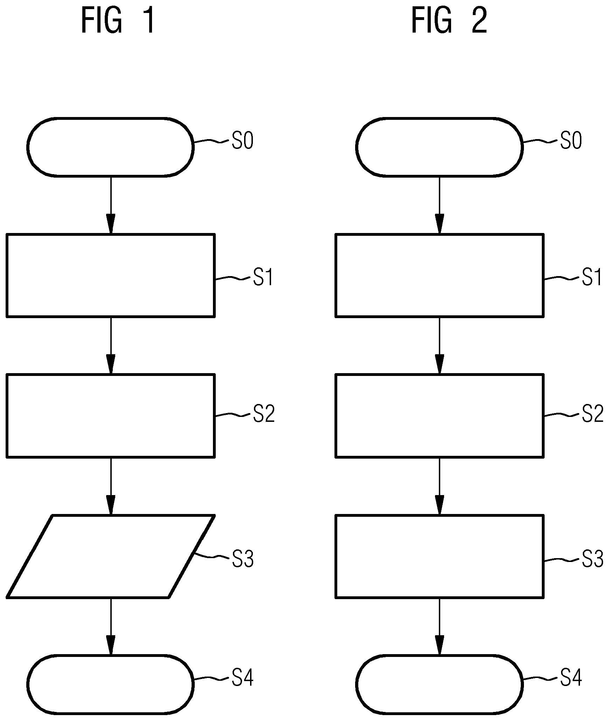

Figur 1 zeigt ein erstes Flussdiagramm zum Betrieb eines Energiesystems gemäß einer ersten Ausgestaltung der Erfindung.

Das erste Flussdiagramm verdeutlicht ein Verfahren zur Bestimmung einer Einschaltreihenfolge von Komponenten eines Energiesystems. Dies entspricht einem Verfahren zum Betrieb des Energiesystems gemäß einer Ausgestaltung der Erfindung.

Der Start des dargestellten Verfahrens ist mit dem Bezugszeichen S0 gekennzeichnet.

In einem ersten Schritt, der mit dem Bezugszeichen S1 gekennzeichnet ist, werden die Grenzschaltwerte für alle Komponenten des Energiesystems mittels einer Regeleinheit berechnet. Zur Berechnung der Grenzschaltwerte werden jeweils eine Regelgröße sowie ein Wirkungsgrad der jeweiligen Komponente herangezogen. Hierbei können die Grenzschaltwerte verschieden aus der jeweiligen Regelgröße und dem jeweiligen Wirkungsgrad gebildet werden. Beispielsweise ist für ein Blockheizkraftwerk ***K*₁** = ***p*_{1,thermisch}/*η*_{1,thermisch}** mit ***p*_{1,thermisch}** = ***p*_{1,Gas}** - ***η*_{1,elektrisch}** · ***p*_{1,elektrisch}** und für einen Gasboiler ***K*₂** = ***p*_{2,thermisch}/*η*_{2,thermisch}** mit ***p*_{2,thermisch}** = ***p*_{2,Gas}**. Hierbei bezeichnet ***p*_{1,Gas}** die zum Gasverbrauch des Blockheizkraftwerkes zugehörige Regelgröße, ***p*_{2,Gas}** die zum Gasverbrauch des Gasboilers zugehörige Regelgröße, ***p*_{1,elektrisch}** die zur Bereitstellung elektrischer Energie durch das Blockheizkraftwerk zugehörige Regelgröße, ***η*_{1,elektrisch}** den Wirkungsgrad des Blockheizkraftwerkes für die Bereitstellung der elektrischen Energie, ***η*_{1,thermisch}** den Wirkungsgrad des Blockheizkraftwerkes für die Bereitstellung von Wärme, und ***η*_{2,thermisch}** den Wirkungsgrad des Gasboilers für die Bereitstellung von Wärme.

In einem zweiten Schritt, der mit dem Bezugszeichen S2 gekennzeichnet ist, werden die berechneten Grenzschaltwerte gemäß ihrer Größe aufsteigend sortiert oder angeordnet. Dadurch steht beispielsweise fest, welche der Komponente den kleinsten Grenzschaltwert aufweist und zuerst zur Bereitstellung der Energieform herangezogen wird. Dies kann durch eine Regeleinheit des Energiesystems erfolgen.

In einem dritten Schritt, der mit dem Bezugszeichen S3 gekennzeichnet ist, ergibt sich aus der Berechnung und Sortierung der Grenzschaltwerte eine bezüglich der Grenzschaltwerte optimale Einschaltreihenfolge der Komponenten des Energiesystems. Dadurch wird der Betrieb des Energiesystems verbessert.

Der Stopp des Verfahrens ist mit dem Bezugszeichen S4 gekennzeichnet.

In Figur 2 ist ein zur Figur 1 vergleichbares zweites Flussdiagramm zum Betrieb eines Energiesystems gemäß einer zweiten Ausgestaltung der Erfindung dargestellt, wobei ein Energiespeicher des Energiesystems berücksichtigt wird.

Der Start des Verfahrens zum Betrieb des Energiesystems ist mit dem Bezugszeichen S0 gekennzeichnet.

In einem ersten Schritt, der mit dem Bezugszeichen S1 gekennzeichnet ist, werden angeforderten Lasten durch die mittels des Energiespeichers gespeicherte Energieform, soweit möglich und vorhanden, gedeckt. Mit anderen Worten wird zunächst der Energiespeicher bis auf einen minimalen Wert seines Ladezustandes zur Deckung der Last entladen.

In einem zweiten Schritt, der mit dem Bezugszeichen S2 gekennzeichnet ist, werden angeforderte Lasten mittels energieerzeugender Komponenten des Energiesystems gemäß einer mittels der vorliegenden Erfindung ermittelten optimalen Einschaltreihenfolge gedeckt. Die optimale Einschaltreihenfolge der Komponente wird mittels eines erfindungsgemäßen Verfahrens oder einer seiner Ausgestaltungen ermittelt. Mit anderen Worten werden die Grenzschaltwerte der Komponenten berechnet und die Komponenten gemäß einer aufsteigenden Reihenfolge der Grenzschaltwerte zur Bereitstellung der Energieform und somit zur Deckung der Lasten verwendet. Mit anderen Worten entspricht der zweite Schritt S2 dem in Figur 1 erläuterten Verfahren.

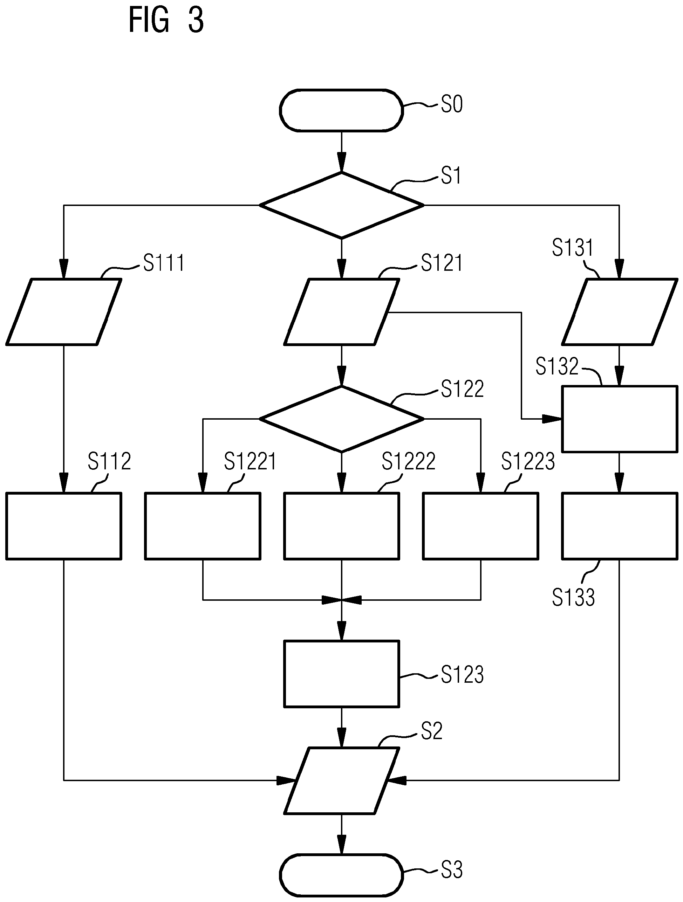

In einem mit dem Bezugszeichen S3 gekennzeichneten dritten Schritt erfolgt eine Regelung des Energiespeichers gemäß wenigstens einer Regelstrategie. Hierbei können verschiedene Regelstrategien vorgesehen sein. Die Regelung beziehungsweise die Regelstrategien regeln insbesondere die Beladung des Energiespeichers. Hierbei kann der Energiespeicher durch eine der Komponenten des Energiesystems beladen werden. Die Regelung kann weiterhin berücksichtigen, dass der Energiespeicher nur bis zu einem festgelegten minimalen Ladezustand entladen wird. Nach einem wenigstens teilweisen entladen des Energiespeichers ist ein Beladen des Energiespeichers erforderlich. Hierzu können drei vorteilhafte Regelstrategien vorgesehen sein, die im Weiteren in Bezug auf Figur 3 beschrieben werden.

Der Stopp des Verfahrens ist mit dem Bezugszeichen S4 gekennzeichnet.

Figur 3 zeigt die drei Regelstrategien zur Regelung des Ladezustandes, das heißt zur Regelung der Beladung und/oder Entladung des Energiespeichers.

Der Start des Verfahrens ist mit dem Bezugszeichen S0 gekennzeichnet.

In einem ersten Schritt, der mit dem Bezugszeichen S1 gekennzeichnet ist, erfolgt eine Verzweigung in die drei verschiedenen Regelungen beziehungsweise Regelstrategien. Die Verzweigung ist mit dem Bezugszeichen S1 gekennzeichnet. Jede der Regelstrategien erwartet eine Eingabe, die jeweils mit dem Bezugszeichen S111, S121 und S131 gekennzeichnet ist.

Die erste Eingabe S111 kennzeichnet eine Regelung gemäß des Ladezustandes des Energiespeichers (englisch: State of Charge; SOC oder SOC-Regelung).

Die zweite Eingabe S121 ist durch einen Zustand Sommer gekennzeichnet, wobei anschließend festgelegt wird, wann der Zustand Sommer vorliegt.

Die dritte Eingabe S131 ist durch den der im Energiespeicher gespeicherten Energieform zugeordneten Grenzschaltwert gekennzeichnet.

Die Verzweigung S1 weist demnach drei Zweige auf, die den drei Regelstrategien entsprechen, und durch eine entsprechende der Eingaben S111, S121, S131 festgelegt sind.

Der erste Zweig der Verzweigung S1 berücksichtigt den Ladezustand des Energiespeichers, sodass eine SOC-Regelung verwendet wird. Mit anderen Worten wird in einem zweiten Schritt S112 des ersten Zweiges der Energiespeicher mittels der bezüglich des Grenzschaltwertes effizientesten Komponente (kleinster Grenzschaltwert) bis 100 Prozent geladen. Der Energiespeicher ist bei 100 Prozent vollständig beladen. Mit der zweiteffizientesten Komponente (zweitkleinster Grenzschaltwert) wird der Energiespeicher bis zu 95 Prozent geladen, mit der dritteffizientesten Komponente (drittkleinster Grenzschaltwert) bis zu 90 Prozent, mit der vierteffizientesten Komponente (viertkleinster Grenzschaltwert) bis zu 85 Prozent, mit der fünfteffizientesten Komponente (fünftkleinster Grenzschaltwert) bis zu 80 Prozent, mit der sechsteffizientesten Komponente (sechstkleinster Grenzschaltwert) bis zu 50 Prozent und mit der siebteffizientesten Komponente (siebtkleinster Grenzschaltwert) bis zu 40 Prozent.

Der zweite Zweig der Verzweigung S1 basiert auf der Eingabe S121 (Sommer-Regelung). In einem zweiten Schritt S122 des zweiten Zweiges wird festgelegt, ob der Zustand Sommer vorliegt. Dies kann in drei verschiedenen Arten erfolgen, sodass eine Unterverzweigung S122 in einen ersten, zweiten und dritten Unterzweig erfolgt.

Gemäß einem Schritt S1221 des ersten Unterzweiges wird der Zustand Sommer dadurch festgelegt, dass die maximale Tagetemperatur größer als 15 Grad Celsius ist.

Gemäß einem Schritt S1222 des zweiten Unterzweiges wird der Zustand Sommer dadurch festgelegt, dass eine maximale Last in Bezug auf die gespeicherte Energieform einer folgenden Woche größer ist als die Summe der Nennleistungen der einzelnen die Energieform erzeugenden Komponenten des Energiesystems. Dies ist insbesondere für eine Kältelast von Vorteil.

Gemäß einem Schritt S1223 des dritten Unterzweiges wird der Zustand Sommer meteorologisch festgelegt, beispielsweise ist Sommer von Mitte Mai bis Mitte September.

Das Ergebnis der drei genannten Festlegungen des Zustandes Sommer, welches mit dem Bezugszeichen S123 gekennzeichnet ist, ist ein maximaler Ladezustand des Energiespeichers. Hierbei wird der Energiespeicher im Zustand Sommer bis zu 75 Prozent beladen. Liegt der Zustand Sommer nicht vor, typischerweise im Winter, so erfolgt eine Beladung bis zu 25 Prozent.

Der dritte Zweig der Verzweigung S1 basiert auf der Eingabe S131 (Grenzschaltwert-Regelung). Hierbei erfolgt in einem ersten Schritt S132 des dritten Zweiges eine Feststellung des Zustandes Sommer. Mit anderen Worten wird die Eingabe S131 berücksichtigt. In einem zweiten Schritt S133 des dritten Zweiges erfolgt eine Regelung in Abhängigkeit des Grenzschaltwertes der mittels des Energiespeichers gespeicherten Energieform. Hierzu wird im zweiten Schritt S133 des dritten Zweiges der Grenzschaltwert der Energieform innerhalb des Energiespeichers so gering wie möglich gehalten. Dies kann beispielsweise durch eine Erzeugung der Energieform mittels wenigstens einer der Komponenten des Energiesystems erfolgen, die einen kleineren Grenzschaltwert aufweist. Die Komponente wird dann zur Beladung des Energiespeichers herangezogen, wodurch der Grenzschaltwert des Energiespeichers verringert wird.

Die Ausgabe der drei erörterten Regelstrategien ist die jeweilige Beladung des Energiespeichers, die mit dem Bezugszeichen S2 gekennzeichnet ist.

Ein Stopp des Flussdiagramms ist mit dem Bezugszeichen S3 gekennzeichnet.

Die vorliegende Erfindung stellt ein Energiesystem mit einer Mehrzahl von Komponenten bereit, welches bezüglich den Komponenten zugeordneten Grenzschaltwerten einen optimalen Betrieb, und somit eine optimale Einschaltreihenfolge der Komponenten zur Bereitstellung wenigstens einer Energieform, beispielsweise zur Deckung einer Last, ermöglicht. Weiterhin stellt die vorliegende Erfindung ein Verfahren für einen in Bezug auf die Grenzschaltwerte der Komponenten optimalen Betrieb des Energiesystems bereit.

Obwohl die Erfindung im Detail durch die bevorzugten Ausführungsbeispiele näher illustriert und beschrieben wurde, so ist die Erfindung nicht durch die offenbarten Beispiele eingeschränkt. Andere Variationen können vom Fachmann hieraus abgeleitet werden, ohne den in den Ansprüchen definierten Schutzumfang der Erfindung zu verlassen.

## Patentansprüche

1. Energiesystem, welches eine Energieform für einen Energieverbraucher bereitstellt, umfassend eine erste und eine zweite Komponente sowie eine Regeleinheit, wobei
- die Komponenten zur Bereitstellung einer selben Energieform ausgebildet sind; und
- wobei die Regeleinheit wenigstens zur Regelung der Bereitstellung der Energieform und zur Berechnung eines ersten Grenzschaltwerts ***K*₁** der ersten Komponente und eines zweiten Grenzschaltwerts ***K*₂** der zweiten Komponente ausgebildet ist;
**dadurch gekennzeichnet, dass** die Regeleinheit dazu ausgebildet ist
- den ersten Grenzschaltwert ***K*₁** mittels ***K*₁** = ***p*₁/*η*₁** zu berechnen, wobei ***p*₁** die Regelgröße und ***η*₁** den Wirkungsgrad der ersten Komponente in Bezug auf die Bereitstellung der Energieform kennzeichnen; und
- den zweiten Grenzschaltwert ***K*₂** mittels ***K*₂ = *p*₂/*η*₂** zu berechnen, wobei ***p*₂** die Regelgröße und ***η*₂** den Wirkungsgrad der zweiten Komponente in Bezug auf die Bereitstellung der Energieform kennzeichnen; und wobei
- die Regeleinheit ferner dazu ausgebildet ist, die Bereitstellung der Energieform derart zu regeln, dass die Energieform durch die Komponente mit dem kleinsten der zwei Grenzschaltwerte (***K*₁, *K*₂**) bereitgestellt wird.

2. Energiesystem gemäß Anspruch 1, **dadurch gekennzeichnet, dass** als Regelgröße der ersten und zweiten Komponente eine Kohlenstoffdioxidemission der jeweiligen Komponente vorgesehen ist.

3. Energiesystem gemäß einem der vorhergehenden Ansprüche, **dadurch gekennzeichnet, dass** als Regelgröße der ersten und zweiten Komponente ein Kostenwert zur Bereitstellung der Energieform durch die jeweilige Komponente vorgesehen ist.

4. Energiesystem gemäß einem der vorhergehenden Ansprüche, **dadurch gekennzeichnet, dass** die erste Komponente als Blockheizkraftwerk ausgebildet ist, wobei das Blockheizkraftwerk zur Bereitstellung von Wärme und elektrischer Energie ein Gas bezieht, und der erste Grenzschaltwert ***K*₁** der ersten Komponente mittels ***K*₁** = ***p*_{thermisch}/*η*_{thermisch}** mit ***p*_{thermisch}** = ***p*_{Gas}** - ***η*_{elektrisch}** · ***p*_{elektrisch}** gebildet ist, wobei ***p*_{Gas}** die zum Gasverbrauch des Blockheizkraftwerkes zugehörige Regelgröße ist, ***p*_{elektrisch}** die zur Bereitstellung elektrischer Energie durch das Blockheizkraftwerk zugehörige Regelgröße ist, ***η*_{elektrisch}** den Wirkungsgrad des Blockheizkraftwerkes für die Bereitstellung der elektrischen Energie und ***η*_{thermisch}** den Wirkungsgrad für die Erzeugung der Wärme kennzeichnet.

5. Energiesystem gemäß einem der vorhergehenden Ansprüche, **dadurch gekennzeichnet, dass** das Energiesystem wenigstens einen Energiespeicher, insbesondere einen Wärmespeicher oder einen Kältespeicher, umfasst, wobei die Regeleinheit dazu ausgebildet ist, den Ladezustand des Energiespeichers zu regeln.

6. Energiesystem gemäß Anspruch 5, **dadurch gekennzeichnet, dass** der Energiespeicher dazu ausgebildet ist, mittels wenigstens einer der Komponenten des Energiesystems beladen zu werden.

7. Verfahren zum Betrieb eines Energiesystems, welches eine Energieform für einen Energieverbraucher bereitstellt, wobei das Energiesystem wenigstens eine erste und zweite Komponente sowie eine Regeleinheit umfasst, wobei die Komponenten zur Bereitstellung einer selben Energieform ausgebildet sind, und wobei die Regeleinheit wenigstens zur Regelung der Bereitstellung der Energieform und zur Berechnung eines ersten Grenzschaltwerts ***K*₁** der ersten Komponente und eines zweiten Grenzschaltwerts K₂ der zweiten Komponente ausgebildet ist, umfassend die Schritte:
- Berechnen eines ersten Grenzschaltwertes ***K*₁** der ersten Komponente mittels ***K*₁** = ***p*₁/*η*₁**, wobei ***p*₁** die Regelgröße und ***η*₁** den Wirkungsgrad der ersten Komponente in Bezug auf die Bereitstellung der Energieform kennzeichnen;
- Berechnen eines zweiten Grenzschaltwertes ***K*₂** der zweiten Komponente mittels ***K*₂** = ***p*₂/*η*₂**, wobei ***p*₂** die Regelgröße und ***η*₂** den Wirkungsgrad der zweiten Komponente in Bezug auf die Bereitstellung der Energieform kennzeichnen;
und
- Bereitstellen der Energieform durch die Komponente mit dem kleinsten der zwei Grenzschaltwerte (***K*₁, *K*₂**).

8. Verfahren gemäß Anspruch 7, bei dem als Regelgröße der ersten und zweiten Komponente eine Kohlenstoffdioxidemission der jeweiligen Komponente oder ein Kostenwert zur Bereitstellung der Energieform durch die jeweilige Komponente verwendet wird.

9. Verfahren gemäß Anspruch 7 oder 8, bei dem eine Beladung und/oder eine Entladung eines Energiespeichers des Energiesystems geregelt werden/wird.

10. Verfahren gemäß Anspruch 9, bei dem die Regelung der Entladung des Energiespeichers in Abhängigkeit wenigstens eines zu einer der Entladung vorangegangenen Beladung des Energiespeichers zugehörigen Grenzschaltwertes erfolgt, wobei der Grenzschaltwert des Energiespeichers aus den Grenzschaltwerten der zu seiner Beladung beitragenden Komponenten gebildet wird.

11. Verfahren gemäß einem der Ansprüche 9 bis 10, bei dem der Energiespeicher durch eine Mehrzahl von Komponenten in aufsteigender Reihenfolge ihrer Grenzschaltwerte geladen wird.

12. Verfahren gemäß einem der Ansprüche 8 bis 11, bei dem die Regelung der Beladung und/oder Entladung des Energiespeichers in Abhängigkeit der am Standort des Energiesystems vorherrschenden Jahreszeit erfolgt.

## Claims

1. Energy system, which provides a form of energy for an energy consumer, comprising a first and a second component and also a control unit, wherein
- the components are designed to provide the same form of energy; and
- wherein the control unit is designed at least to control the provision of the form of energy and to calculate a first limit switching value ***K₁*** of the first component and a second limit switching value ***K₂*** of the second component;
**characterized in that** the control unit is designed
- to calculate the first limit switching value ***K₁*** by means of ***K₁** =* ***ρ₁*/*****η₁**,* wherein ***ρ₁*** denotes the control variable and ***η₁*** denotes the efficiency of the first component in relation to the provision of the form of energy; and
- to calculate the second limit switching value ***K₂*** by means of ***K₂** =* ***ρ₂*/*****η₂**,* wherein ***ρ₂*** denotes the control variable and ***η₂*** denotes the efficiency of the second component in relation to the provision of the form of energy; and wherein
- the control unit is also designed to control the provision of the form of energy in such a way that the form of energy is provided by the component with the lowest of the two limit switching values (***K₁, K₂***).

2. Energy system according to Claim 1, **characterized in that** a carbon dioxide emission of the respective component is provided as control variable of the first and second component.

3. Energy system according to one of the preceding claims, **characterized in that** a cost value for providing the form of energy by way of the respective component is provided as control variable of the first and second component.

4. Energy system according to one of the preceding claims, **characterized in that** the first component is designed as a cogeneration unit, wherein the cogeneration unit draws a gas in order to provide heat and electric energy, and the first limiting switching value ***K₁*** of the first component is formed by means of ***K₁** =* ***ρₜₕₑᵣₘₐₗ*/*ηₜₕₑᵣₘₐₗ*** with ***ρₜₕₑᵣₘₐₗ** = **ρ_{gas}*** - ***η_{electrical}***· ***ρ_{electrical}**,* wherein ***ρ_{gas}*** is the control variable associated with the gas consumption of the cogeneration unit, ***ρ_{electrical}*** is the control variable associated with the provision of electrical energy by way of the cogeneration unit, ***η_{electrical}*** denotes the efficiency of the cogeneration unit for providing the electrical energy and ***ηₜₕₑᵣₘₐₗ*** denotes the efficiency for generating the heat.

5. Energy system according to one of the preceding claims, **characterized in that** the energy system comprises at least one energy store, in particular a heat store or a cold store, wherein the control unit is designed to control the state of charge of the energy store.

6. Energy system according to Claim 5, **characterized in that** the energy store is designed to be charged by means of at least one of the components of the energy system.

7. Method for operating an energy system, which provides a form of energy for an energy consumer, wherein the energy system comprises at least one first and second component and also a control unit, wherein the components are designed to provide the same form of energy, and wherein the control unit is designed at least to control the provision of the form of energy and to calculate a first limit switching value ***K₁*** of the first component and a second limit switching value ***K₂*** of the second component,
comprising the following steps:
- calculating a first limit switching value ***K₁*** of the first component by means of ***K₁** =* ***ρ₁*/*****η₁**,* wherein ***ρ₁*** denotes the control variable and ***η₁*** denotes the efficiency of the first component in relation to the provision of the form of energy;
- calculating a second limit switching value ***K₂*** of the second component by means of ***K₂** =* ***ρ₂*/*****η₂**,* wherein ***ρ₂*** denotes the control variable and ***η₂*** denotes the efficiency of the second component in relation to the provision of the form of energy; and
- providing the form of energy by way of the component with the lowest of the two limit switching values (**K*₁*, *K₂***).

8. Method according to Claim 7, in which a carbon dioxide emission of the respective component or a cost value for providing the form of energy by way of the respective component is used as control variable of the first and second component.

9. Method according to Claim 7 or 8, in which charging and/or discharging of an energy store of the energy system are/is controlled.

10. Method according to Claim 9, in which the discharging of the energy store is controlled depending on at least one limit switching value associated with a charging of the energy store preceding the discharging, wherein the limit switching value of the energy store is formed from the limit switching values of the components contributing to the charging of said energy store.

11. Method according to one of Claims 9 to 10, in which the energy store is charged by a plurality of components in ascending order of their limit switching values.

12. Method according to one of Claims 8 to 11, in which the charging and/or discharging of the energy store is controlled depending on the time of year present at the location of the energy system.

## Revendications

1. Système fournissant de l'énergie, qui fournit une forme d'énergie à un consommateur d'énergie, comprenant un premier et un deuxième composant ainsi qu'une unité de régulation, dans lequel
- les composants sont constitués pour fournir une même forme d'énergie ; et
- dans lequel l'unité de régulation est constituée au moins pour la régulation de fourniture de la forme d'énergie et pour le calcul d'une première valeur *K₁* limite de mise en circuit du premier composant et d'une deuxième valeur *K₂* limite de mise en circuit du deuxième composant ;
**caractérisé en ce que** l'unité de régulation est constituée
- pour calculer une première valeur *K₁* limite de mise en circuit du premier composant au moyen de *K₁ =p₁*/*η₁, p₁* caractérisant la grandeur de régulation et *η₁* le rendement du premier composant en ce qui concerne la fourniture de la forme d'énergie ; et
- pour calculer une deuxième valeur *K₂* limite de mise en circuit du deuxième composant au moyen de *K₂ =p₂* /*η₂, p₂* caractérisant la grandeur de régulation et *η₂* le rendement du deuxième composant en ce qui concerne la fourniture de la forme d'énergie ; et dans lequel
- l'unité de régulation est constituée en outre pour réguler la fourniture de la forme d'énergie, de manière à fournir la forme d'énergie par le composant ayant la plus petite des deux valeurs (*K₁, K₂*) limites de mise en circuit.

2. Système fournissant de l'énergie suivant la revendication 1, **caractérisé en ce qu'**il est prévu comme grandeur de régulation du premier et du deuxième composant une émission de dioxyde de carbone du composant respectif.

3. Système fournissant de l'énergie suivant l'une des revendications précédentes, **caractérisé en ce qu'**il est prévu comme grandeur de régulation du premier et du deuxième composant une valeur de coût pour la fourniture de la forme d'énergie par le composant respectif.

4. Système fournissant de l'énergie suivant l'une des revendications précédentes, **caractérisé en ce que** le premier composant est constitué sous la forme d'une centrale thermique de cogénération, dans lequel la centrale thermique de cogénération traite un gaz pour la fourniture de chaleur et d'énergie électrique et la première valeur *K₁* limite de mise en circuit du premier composant est formée au moyen de *K₁* =*p*_{thermisch} /*η*_{thermisch} avec *p*_{thermisch} =*p*_{gas}-*η*_{electrisch}** p*_{electrisch}, dans lequel *p*_{gas} est la grandeur de régulation associée à la consommation de gaz de la centrale thermique de cogénération, *p*_{electrisch} est la grandeur de régulation associée à la fourniture d'énergie électrique par la centrale thermique de cogénération, *η*_{electrisch} caractérise le rendement de la centrale thermique de cogénération pour la fourniture de l'énergie électrique et *η*_{thermisch} caractérise le rendement de la production de chaleur.

5. Système fournissant de l'énergie suivant l'une des revendications précédentes, **caractérisé en ce que** le système fournissant de l'énergie comprend au moins un accumulateur d'énergie, notamment un accumulateur de chaleur ou un accumulateur de froid, dans lequel l'unité de régulation est constituée pour réguler l'état de charge de l'accumulateur d'énergie.

6. Système fournissant de l'énergie suivant la revendication 5, **caractérisé en ce que** l'accumulateur d'énergie est constitué pour être chargé au moyen d'au moins l'un des composants du système d'énergie.

7. Procédé fournissant de l'énergie, qui fournit une forme d'énergie à un consommateur d'énergie, comprenant un premier et un deuxième composant ainsi qu'une unité de régulation, dans lequel
- les composants sont constitués pour fournir une même forme d'énergie ; et
- dans lequel l'unité de régulation est constituée au moins pour la régulation de fourniture de la forme d'énergie et pour le calcul d'une première valeur *K₁* limite de mise en circuit du premier composant et d'une deuxième valeur *K₂* limite de mise en circuit du deuxième composant,
comprenant les stades
- calcul d'une première valeur *K₁* limite de mise en circuit du premier composant au moyen de *K₁ =p₁*/*η₁, p₁* caractérisant la grandeur de régulation et *η₁* le rendement du premier composant en ce qui concerne la fourniture de la forme d'énergie ;
- calcul d'une deuxième valeur *K₂* limite de mise en circuit du deuxième composant au moyen de *K₂ =ρ₂*/*η₂, p₂* caractérisant la grandeur de régulation et *η₂* le rendement du deuxième composant en ce qui concerne la fourniture de la forme d'énergie ;
- fourniture de la forme d'énergie par le composant ayant la plus petite des deux valeurs (*K₁, K₂*) limites de mise en circuit.

8. Procédé suivant la revendication 7, dans lequel on utilise comme grandeur de régulation du premier et du deuxième composant une émission de dioxyde de carbone du composant respectif ou une valeur de coût pour la fourniture de la forme d'énergie par le composant respectif.

9. Procédé suivant la revendication 7 ou 8, dans lequel on règle une charge et/ou une décharge d'un accumulateur d'énergie du système.

10. Procédé suivant la revendication 9, dans lequel la régulation de la décharge de l'accumulateur d'énergie s'effectue en fonction d'au moins une charge, précédent la décharge, de l'accumulateur d'énergie, la valeur limite de mise en circuit de l'accumulateur d'énergie étant formé à partir des valeurs limites de mise en circuit des composants contribuants à sa charge.

11. Procédé suivant l'une des revendications 9 à 10, dans lequel on charge l'accumulateur d'énergie par une pluralité de composants en succession croissante de leurs valeurs limites de mise en circuit.

12. Procédé suivant l'une des revendications 8 à 11, dans lequel la régulation de la charge et/ou de la décharge de l'accumulateur d'énergie s'effectue en fonction de la saison à l'endroit où se trouve le système.
